Europäisches Patentamt

European Patent Office

Office européen des brevets

(19)

(11) Veröffentlichungsnummer: **0 390 742**
**A1**

# EUROPÄISCHE PATENTANMELDUNG

(12)

(21) Anmeldenummer: **90810232.0**

(22) Anmeldetag: **22.03.90**

(51) Int. Cl.5: **C22B 9/02**

(30) Priorität: **30.03.89 US 330612**

(43) Veröffentlichungstag der Anmeldung:
**03.10.90 Patentblatt 90/40**

(84) Benannte Vertragsstaaten:
**BE CH DE ES FR GB IT LI NL SE**

(71) Anmelder: **ALUSUISSE-LONZA SERVICES AG**
**Feldeggstrasse 4**
**CH-8034 Zürich(CH)**

(72) Erfinder: **Cummings, Michael A.**
**6 Westin Street**
**Taylors, South Carolina 29687(US)**

(54) Filtrationssystem für schmelzflüssige Metalle und Verfahren zur Filtration.

(57) Die vorliegende Erfindung bezieht sich auf ein verbessertes Filtrationssystem für geschmolzenes Metall. Das Filtrationssystem enthält wenigstens eine Filteranordnung (20), die in einer Filterkammer (10) zwischen einem Einlass (14) und einem Auslass (16) für das geschmolzene Metall angeordnet ist, und einen Damm (30), der sich zwischen jeder Filteranordnung (20) und jedem Auslass (16) befindet. Jeder Damm (30) verhindert, dass das anfängliche zum Benetzen des/der in jeder Filteranordnung befindli-chen Filters/Filter gebrauchte geschmolzene Metall direkt zum Auslass (16) fliesst. Statt dessen wird durch den Damm (30) das geschmolzene anfängli-che Metall gesammelt und bildet dadurch einen See von heisser Metallschmelze. Es wurde gefunden, dass der See den Wärmeverlust während des Filtra-tionsprozesses reduziert. Ferner bezieht sich die Er-findung auf ein Verfahren zum Gebrauch des Filtra-tionssystems.

FIG-2

## Filtrationssystem für schmelzflüssige Metalle und Verfahren zur Filtration

Die vorliegende Erfindung bezieht sich auf ein Filtrationssystem für schmelzflüssige Metalle und ein Verfahren zur Filtration. Das Filtrationssystem enthält Abdämmungen zur Sammlung eines schmelzflüssigen Metallvolumens, welches ausreicht, um den Wärmeverlust zu reduzieren, wenn die Schmelze durch das Filtrationssystem zu einer Giessdüse fliesst, und verhindert dabei erheblich Erstarrungsprobleme in der zu vergiessenden Metallschmelze. Die Erfindung bezieht sich auch auf ein Verfahren zur Anwendung des Systems.

In der Praxis enthält geschmolzenes Metall üblicherweise eingeschlossene Feststoffe, die schädlich für das gegossene Metallprodukt sind. Nachdem das geschmolzene Metall erstarrt ist, erscheinen diese eingeschlossenen Feststoffe als Einschlüsse in dem endgültigen Giessprodukt. Diese Einschlüsse beeinflussen sowohl die physikalischen Eigenschaften als auch das ästhetische Erscheinungsbild des endgültigen Giessprodukts zu deren Ungunsten.

Zum Entfernen der Verunreinigungen aus dem geschmolzenem Metall sind eine Vielzahl verschiedener Techniken bekannt. Das US-Patent 3 006 473 beschreibt ein System, in welchem geschmolzenes Metall durch eine poröse Kohlefilterplatte in ein Filterabteil fliesst. Das System schliesst einen Ueberlaufmetallauslass ein, der so konstruiert ist, dass das geschmolzene Metall wenigstens über den beaufschlagten oberen Filterplattenteil behandelt wird.

In einigen Systemen findet die Filtration des geschmolzenen Metalls in einer Kammer statt, die einen oder mehrere Gaseinlässe zum Zuführen inerter Gase aufweist. Das US- Patent 4 087 080 zeigt beispielsweise ein solches System. In diesem System fliesst die Schmelze in eine Filterkammer, das ein loses Granulatbett und Vorrichtungen zum Einführen des Gases in die Schmelze enthält. Die Schmelze fliesst nach unten durch die Filterkammer in eine Aufstiegskammer, dann aufwärts durch die Aufstiegskammer und schliesslich aus der Aufstiegskammer heraus.

In einem anderen System fliesst das geschmolzene Metall durch eine Serie nacheinanderfolgend angeordneter Reinigungseinheiten, bestehend aus (1) eine Entschlackungseinheit, in der relativ grosse stückige Verunreinigungen durch ein refraktäres Gewebefilter entfernt werden, (2) eine Schmelzeeinheit zur Entfernung des in der Schmelze eingeschlossenen und gelösten Wasserstoffs, (3) eine Adsorptionseinheit und (4) eine Schlussfiltrationseinheit, in der feinere stückige Verunreinigungen durch ein starres, poröses refraktäres Filtermedium entfernt werden. Das US-Patent 4 007 923 zeigt ein derartiges System.

Für die Filtration von geschmolzenem Metall besonders geeignete poröse keramische Schaummaterialien sind bekannt. Die US-Patente 4 024 056, 4 092 153, 4 277 281 und 4 640 497 zeigen verschiedene Filtrationssysteme, die keramische Schaumfiltermaterialien einsetzen. Keramische Schaumfiltermaterialien sind zur Filtration geschmolzenen Metalls aufgrund einer Vielzahl von Gründen, einschliesslich wegen ihrer hervorragenden Filterwirksamkeit, wegen niedriger Kosten, wegen der Leichtigkeit der Anwendung und Handhabung, besonders geeignet.

Es sind Barrieren in Zwischengiessbehältern wie z.B. Trögen zur Unterstützung der Abtrennung der nichtmetallischen Einschlüsse aus dem flüssigen Metall, das den Trog passiert, gebraucht worden. Sie wurden auch gebraucht, um eingeschlossene Gase aus der Metallschmelze zu entfernen. Das US-Patent 4 619 443 zeigt eine solche Barriere in Form eines Dammes. Der Damm hat in seiner oberen Oberfläche Durchlässe zur Entladung von Gas in die Schmelze. Es ist beabsichtigt, die Zirkulation des geschmolzenen Metalls im Trog so zu verbessern, dass Stillstandsbereiche praktisch vermieden werden.

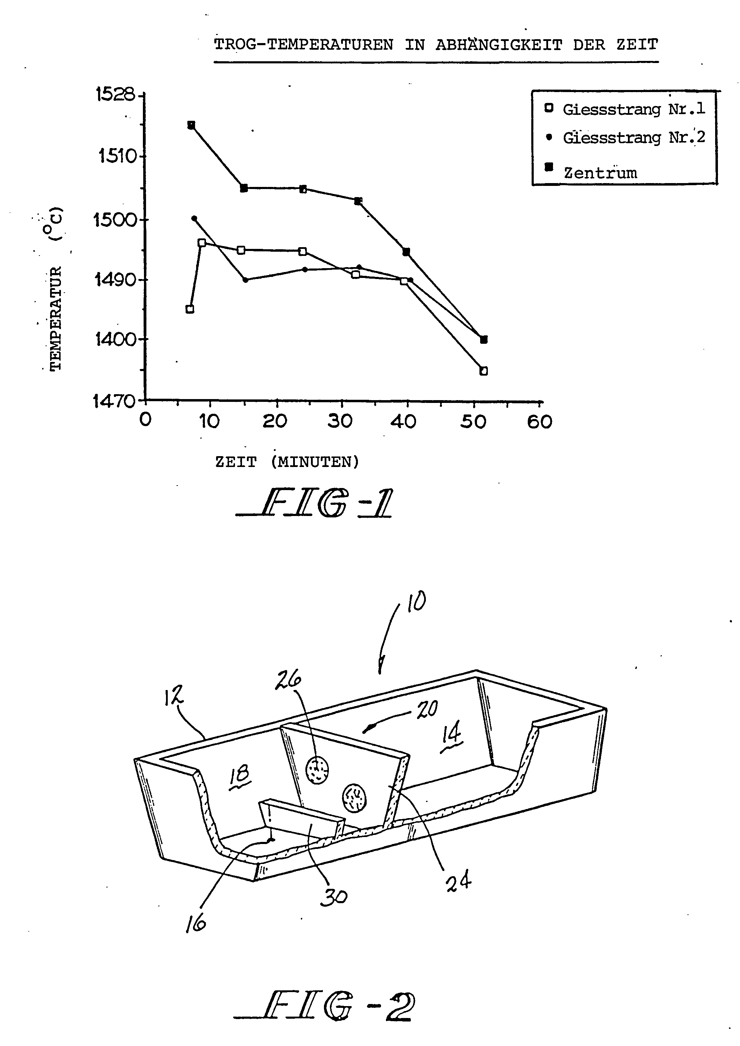

Wie in dem oben erwähnten US-Patent 4 640 497 gezeigt, sind Filtrationssysteme in einem Trog einer kontinuierlichen Giessmaschine eingesetzt worden. Der/die Filter des Systems teilen den Trog in eine oder mehrere Raumbereiche. Das eintretende Metall strömt durch ein Filter, bevor es durch die Trogdüse geführt wird. Während des anfänglichen Filterbenetzungsprozesses geht ein bestimmter Wärmeanteil des Metalls an das Filtrationssystem verloren. Der während dieser Phase erlittene Wärmeverlust kann besonders gross sein. Figur 1 zeigt ein Diagramm, welches die Temperaturverluste über die Zeit für eine rostfreie Stahllegierung, die einen Trog mit einem zentralen Abteil zum Einbringen der Schmelze und zwei Austrittsabteilen, die durch 38 mm dicke $ZrO_2$-$Al_2O_3$-Filter Nr. 10 (ca. 10 PPI) von der zentralen Kammer getrennt sind. Die Wärmeverluste wurden unter Verwendung von Thermoelementen gemessen. Wie aus dem Diagramm ersichtlich ist, treten die Temperaturverluste mit sehr signifikanten Anfangstemperaturverlusten des gefilterten geschmolzenen Metalls auf beiden Seiten der Filteranordnung auf.

Bei normalen Metallverarbeitungstemperaturen wurde gefunden, dass Wärmeverluste erhalten werden, die in einigen Fällen schon ausreichen, das gefilterte Metall in der Düse einer Nachfiltrationskammer zum Verfestigen zu bringen und den Guss zu stoppen. In vielen Fällen würde der Gesamtwärmeverlust, wie er durch eine Temperaturprobe gemessen wurde, anzeigen, dass eine unzureichende Wärmemenge im Giesssystem vorhanden ist; tatsächlich jedoch ist das Metall in der Düse ausreichend abgeschreckt worden, um sich zu verfestigen und den Guss zu verhindern.

Demnach ist es eine Aufgabe der vorliegenden Erfindung, ein verbessertes Filtrationssystem bereit zu stellen, welches die Wärmeverluste während des Filterprozesses reduziert.

Es ist eine weitere Aufgabe der vorliegenden Erfindung, ein verbessertes Filtrationssystem der obigen Art bereit zu stellen, das in einem kontinuierlichen Giesssystem eingesetzt werden kann.

Es ist ferner eine noch weitere Aufgabe der vorliegenden Erfindung, ein verbessertes Filtrationssystem der obigen Art bereit zu stellen, das für den Guss von Eisen und Eisenlegierungen gebraucht werden kann.

Diese und andere Aufgaben sowie die Vorteile des verbesserten Filtrationssystems werden anhand der folgenden Beschreibung und Zeichnungen erläutert.

Die gestellten Aufgaben werden erfindungsgemäss durch ein Filtrationssystem gelöst, das sich dadurch auszeichnet, dass es eine Kammer enthält, die wenigstens einen Einlass und einen Auslass für geschmolzenes Metall und wenigstens eine darin montierte Filteranordnung enthält. Jede Filteranordnung enthält eine, in eine feste plattenartige Vorrichtung sitzende poröse Filtermembran, vorteilhaft ein keramisches Schaumfilter. Um den Wärmeverlust der Metallschmelze zu reduzieren, wenn diese das Filter passiert, ist in der Strömungsrichtung gleich hinter der Filteranordnung eine Barriere bzw. ein Damm angeordnet. Der Damm verhindert, dass das anfängliche Metall, welches durch Benetzen des Filters gebraucht wird, direkt in die Düse vordringt. Statt dessen sammelt der Damm das anfängliche Metall in einem See, der die durch den Filtrationsvorgang bewirkte Abkühlung durch Heranführung von Metallschmelze an beiden Seiten der Filteranordnung sehr stark reduziert.

Figur 1 zeigt ein Diagramm, das einen typischen Temperaturverlust vom Einlass des Filtrationssystems zu dem/den Auslass/Auslässen über die Zeit veranschaulicht.

Figur 2 zeigt eine schematische, teilweise weggebrochene Darstellung einer ersten Ausführung eines Giesstrogfiltrationssystems nach der Erfindung.

Figur 3 ist ein Querschnitt entlang der Linie A-A der Ausführung nach Figur 2.

Figur 4 ist eine schematische, teilweise weggebrochene Darstellung einer zweiten erfindungsgemässen Ausführung eines Giesstrogfiltrationssystems mit doppeltem Filtrationssystem.

Figur 5 ist eine Draufsicht von Figur 4.

Wie bereits früher beschrieben, bezieht sich die vorliegende Erfindung auf ein verbessertes Filtrationssystem zum Gebrauch bei kontinuierlichen oder nicht kontinuierlichen Giesssystemen. Obwohl die Erfindung in Zusammenhang mit einem Giesstrogfiltrationssystem beschrieben wird, wird darauf hingewiesen, dass die vorliegende Erfindung auch andere Arten der Anwendbarkeit von Filtrationssystemen für geschmolzene Metalle beinhaltet. Obwohl die Erfindung ihre besondere Anwendung in der Filtration von Eisen und dessen Legierungen findet, kann in analoger Weise die Erfindung auch für die Filtration von anderen Metallen und Metalllegierungen wie Nickel- und auf Aluminium basierende Metalle und Metallegierungen gebraucht werden.

Figur 2 zeigt einen Trog 10, in welchem flüssiges Metall gegossen wird, was gewöhnlich über einen nicht gezeigten Tiegel erfolgt. Der Giesstrog 10 repräsentiert eine Filterkammer und kann eine hier nicht gezeigte Metallschalung sowie eine ebenfalls nicht gezeigte Isolationsummantelung, z.B. ein Keramikfutter, aufweisen. In einer anderen Ausführungsform kann der Trog 10 ganz aus keramischem Material gebaut werden.

Der Trog 10 kann oben offen sein. Geschmolzenes Metall kann durch die obere Oeffnung in ein Einlassabteil 14 gegossen werden. Der Trog könnte aber auch eine nicht gezeigte Abdeckung mit einer Oeffnung, durch welche das geschmolzene Metall gegossen werden kann, aufweisen. Der Trog 10 kann eine oder mehrere in einem Auslassabteil 18 angeordnete Auslässe 16 aufweisen, durch welche/n das gefilterte geschmolzene Metall zu einer nicht gezeigten Giessdüse fliessen kann. Der Metallfliessweg ist durch den/die Einlass/Einlässe und den/die Auslass/Auslässe 16 vorgegeben.

Mindestens eine Filteranordnung 20 ist in dem Trog 10 zwischen dem Metalleinlass und jedem Metallauslass 16 montiert. Jede Filteranordnung 20 enthält eine plattenförmige feste Wand 24, welche aus einem geschmolzenes Metall widerstehendem Material, beispielsweise Keramik wie Chromtonerde, Mullit etc., besteht, welches resistent gegenüber Thermoschock, Erosion und Korrosion ist, und mindestens ein in der festen Wand befindliches poröses Filter 26, durch welches das geschmolzene Metall fliessen kann, aufweist. Jedes poröse Filter 26 kann ein nach der Lehre des US-Patents 3 962 081 hergestelltes keramisches Schaumfilter oder ein anderes passendes Filter sein. Das US-Patent 3 962 081 beschreibt die Herstellung eines keramischen Schaumfilters durch Imprägnieren eines Polyurethanschaumes mit einem keramischen Schlicker und Brennen des so imprägnierten Materials, wodurch ein keramisches Schaummaterial gebildet wird, das die Form des ursprünglichen Polyurethanschaums aufweist.

Das poröse Filter 26 ist in die feste Wand 24 mit einem Dichtungsmaterial 28, welches zwischen der Peripherie des porösen Filters 26 und dem Wandmaterial liegt, dichtend eingepasst. Die Dichtung 28 kann aber auch fehlen. In einem solchen Fall kann das Filtermaterial an seinem Platz unter Verwendung eines entsprechenden Zements eingekittet werden.

Wie in der Zeichnung gezeigt, kann/können das/die Filter 26 zwei runde Filter mit abgeschrägter peripherer, zur entsprechenden peripheren Kante der festen Wand 24 angepassten Kantenwandung enthalten.

Die Filteranordnungen 20 können in den Trog 10 in jeder gewünschten Art installiert sein. Gewöhnlich ist jede Anordnung 20 entfernbar, um den Filterwechsel zu erleichtern. Wie in Figur 2 gezeigt, teilt die Anordnung 20 den Trog 10 in das Einlassabteil 14 und das Auslassabteil 18.

Es wurde gefunden, dass die Wärme im Metall durch das Filtrationssystem verloren wird. Dieser Wärmeverlust ist während des Benetzungsprozesses besonders gross. In einigen Fällen ist der Wärmeverlust genügend hoch, dass das filtrierte Metall sich in der Düse der nicht gezeigten Nachfiltrationskammer verfestigt und dadurch ein Guss verhindert wird.

Um diesem Problem zu begegnen, weist das Filtrationssystem erfindungsgemäss eine Barriere bzw. einen Damm 30 auf, die/der sich in Fliessrichtung des Metalls unmittelbar hinter der Filteranordnung 20 befindet. Die Barriere 30 dient mehreren Zwecken. Sie sammelt das anfängliche Metall, welches zum Benetzen des porösen Filters 26 gebraucht wird, und reichert es in einem See 32 von geschmolzenem Metall an. Wenn zusätzliches geschmolzenes Metall durch die Filter 26 fliesst, wird das geschmolzene Metall in dem See wieder erwärmt. Dieser erwärmte schmelzflüssige Metallsee unterstützt den Benetzungsprozess und hilft, den Wärmeverlust des geschmolzenen Metalls während der Filtration zu reduzieren. Dies wird zum grossen Teil wegen der Anwesenheit des heissen geschmolzenen Metalls auf beiden Seiten der Filteranordnung bewirkt. Ein noch weiterer Vorteil des erfindungsgemässen Filtrationssystems ist, dass das das System passierende geschmolzene Metall wegen des reduzierten Wärmeverlustes mit einer höheren Durchflussrate fliesst. Das hat zur Folge, dass das Metall weniger geneigt ist, in der Giessdüse zu erstarren. Es kann festgestellt werden, dass das durch das erfindungsgemässe verbesserte Filtrationssystem fliessende geschmolzene Metall besser in der Lage ist, Wärme zurückzuhalten.

Der Damm 30 dient auch dazu, eine erwünschte nach oben gerichtete Fliessrichtung des geschmolzenen Metalls herbeizuführen. Jegliche im bereits die Filter passierten geschmolzenen Metall verbliebenen Einschlüsse sammeln sich durch diese nach oben gerichtete Bewegung in einer dünnen Oberflächenschicht an.

Es wurde gefunden, dass, um die vorgenannten Vorteile zu erreichen, der Damm 30 so positioniert und ausgebildet sein muss, dass er ein spezifisches Metallvolumen sammeln kann. Dieses Metallvolumen muss ausreichend sein, um die Temperatur des schmelzflüssigen Metalls zu erhöhen und/oder zu halten, was dem Giessen förderlich ist. Insbesondere sollte der Damm 30 so positioniert und ausgebildet sein, dass er ein flüssiges Metallvolumen zurückhalten kann, das wenigstens etwa dreimal, vorteilsweise mehr als dreimal, zweckmässig drei- bis dreissigmal, bevorzugt drei- bis zehnmal und insbesondere drei bis fünfmal, so gross wie das gesamte Filtervolumen der Filtrationsanordnung 20 ist. Das gesamte Volumen kann als Summe der Volumina der Filter 26 in der Filteranordnung definiert werden.

Obwohl der Damm 30 jede mögliche Höhe aufweisen kann, ist es vorteilhaft, dass die Oberfläche 34 des Damms sich etwa auf der gleichen Höhe befindet wie die oberste Kante der/des porösen Filter/s 26. Nachdem einmal die Höhe des Damms festgelegt ist, kann selbstverständlich sein Ort in Metallfliessrichtung unterhalb der Filteranordnung bestimmt werden. Alternativ kann zuerst die Position des Damms unterhalb der Filteranordnung vorbestimmt werden und dann die Höhe, die notwendig ist, um das gewünschte Volumen an geschmolzenem Metall zu sammeln.

Der Damm 30 kann aus jedem geeigneten Material, das geschmolzenem Metall widersteht, gefertigt sein. Vorteilhaft ist es, dass er auch aus thermischem Material, z.B. aus einer Zusammensetzung vom Chromoxid - Aluminiumoxid, Zirkonoxid - Aluminiumoxid oder Mullit, gefertigt ist. Das für den Damm 30 ausgewählte Material sollte auch resistent gegen Thermoschock, Erosion und Korrosion sein.

Zum Gebrauch wird geschmolzenes Metall in den Trog 10 gegossen. Der anfängliche Metallfluss wird verwendet, um das/die Filter 26 zu benetzen. Der anfängliche Metallfluss wird durch den Damm 30 vom Vordringen zum Auslass 16 gehindert. Statt dessen sammelt er sich im Raum zwischen Filteranordnung 20 und dem Damm 30 und bildet einen See von heissem geschmolzenem Metall. Wenn mehr geschmolzenes Metall durch das/die Filter 26 fliesst, wird das weitere geschmolzene Metall durch den Damm 30 gezwungen aufzusteigen. Das zusätzliche geschmolzene Metall dient dazu, die Temperatur des gesammelten Metalls zu erhöhen und auf einer brauchbaren Wiedererwärmungstemperatur zu halten. Die Folge der Anwesenheit des erhitzten Metalls auf beiden Seiten der Filteranordnung 20 ist, das der Metallwärmeverlust während des Filtrationsprozesses wesentlich reduziert ist, was folglich, wenn das gefilterte geschmolzene Metall zur Giessdüse läuft, die Neigung des Metalls einzufrieren reduziert.

Die Filteranordnung nach der vorliegenden Erfindung kann in einer grossen Variationsbreite von kontinuierlichen oder nicht kontinuierlichen Giesssystemen genutzt werden. Zum Beispiel kann es sowohl in horizontalen als auch vertikalen Giesssystemen eingesetzt werden. Selbstverständlich kann der Trog 10 bei einem horizontalen Giesssystem einen Einlass für das geschmolzene Metall in einer Seitenwand des Abteils 14 und einen Auslass in einer Seitenwand des Abteils 18 aufweisen. Das erfindungsgemässe Filtrationssystem ist vorteilhaft bei hohen Temperaturen brauchbar, insbeson dere im Anwendungsbereich um 1538°C; dies deswegen, weil bei solchen Systemen grössere Wärmeverlustprobleme überwunden werden müssen.

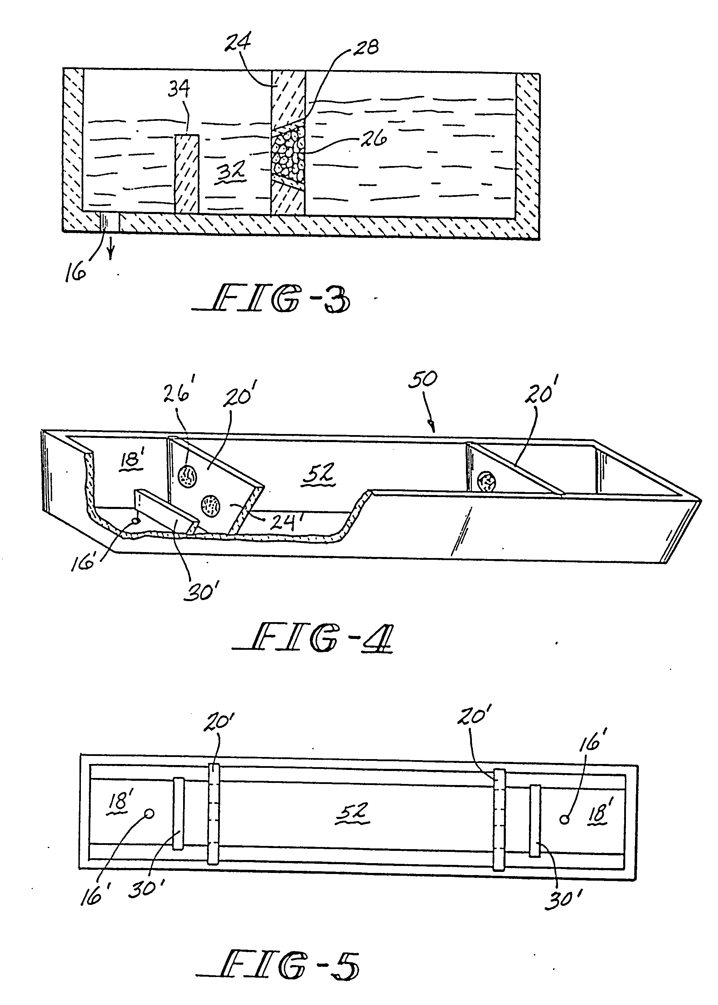

Figuren 4 und 5 veranschaulichen den Gebrauch des erfindungsgemässen Filtrationssystems an einem Trog 50 mit einem zentralen Abteil 52 zur Aufnahme des aus einer Metallquelle, z.B. einem nicht gezeigten Tiegel, stammenden geschmolzenen Metalls und zwei Auslassabteilen 18', welche je einen Auslass 16' aufweisen. Eine Filteranordnung 20' trennt jedes Auslassabteil 18' von dem zentralen Abteil 52. Wie vorher beschrieben, enthält jede Filteranordnung eine feste Wand 24', die ein oder mehrere darin angeordnete Filter 26' enthält. Ein Damm 30' ist entsprechend den obigen Ausführungen zwischen jeder Filteranordnung 20' und jedem Auslass 16' angeordnet, um zu verhindern, dass das gebrauchte anfängliche Metall zur Benetzung der/des Filter/s 26' direkt zum Auslass 16' fliesst, und den erwünschten aufgeheizten schmelzflüssigen Metallsee bildet.

Obwohl es nicht grundsätzlich notwendig ist, können die Tröge 10, 50 vorgeheizt werden. Die Vorheizung kann verwendet werden, um zusätzlich die Reduzierung der Temperaturverringerung im Metall und des Thermoschocks im Filter zu fördern und die Benetzung des Filters zu erleichtern. Wie bereits früher erkannt wurde, reicht die Vorheizung allein nicht aus, um die diskutierten Probleme zu verhindern. Jede geeignete bekannte Anordnung zur Vorheizung der Tröge kann verwendet werden.

Es ist einsichtig, dass das erfindungsgemässe Filtrationssystem für schmelzflüssiges Metall und das entsprechende Verfahren vollständig die gestellten Aufgaben erfüllt und die vorgenannten Vorteile bietet. Obwohl die Erfindung in Verbindung mit spezifischen Ausführungsformen beschrieben wurde, liegt es auf der Hand, dass viele Alternativen, Modifikationen und Varianten bei Kenntnis der vorherigen Beschreibung für den Fachmann naheliegend sind. Alle diese Alternativen Modifikationen und Variationen sollen im Rahmen der breiteren Auslegung ebenfalls unter die Patentansprüche fallen und mit diesen unter Schutz stehen.

## Ansprüche

1. Filtrationssystem für geschmolzene Metalle, dadurch gekennzeichnet, dass das Filtrationssystem eine Filterkammer (10) mit wenigstens einem Einlass (14) und einem Auslass (16) für das geschmolzene Metall, wodurch der Fliessweg desselben dazwischen bestimmt wird, eine zwischen dem Einlass (14) und dem Auslass (16) liegende Filteranordnung (20), wobei die Filteranordnung (20) wenigstens ein poröses, in einer festen plattenförmigen Wand sitzendes Filter (26) enthält, und eine zwischen Filteranordnung (20) und dem Auslass (16) angeordneten Vorrichtung zur Verhinderung, dass das geschmolzene anfängliche Metall zur Benetzung wenigstens eines Filters (26) der Filteranordnung (20) zum Auslass (16) fliesst, und zum Sammeln dieses geschmolzenen Metalls zur Benetzung, so dass dadurch ein See (32) von heissem geschmolzenem Metall gebildet wird, aufweist.

2. Filtrationssystem nach Anspruch 1, dadurch gekennzeichnet, dass die Vorrichtung zur Verhinderung einen in einem bestimmten Abstand von der Filteranordnung (20) Metallstrom abwärts angeordneten Damm (30) mit einer derart ausreichenden Höhe, dass ein ausreichendes Volumen geschmolzenen Metalls gesammelt wird, um einen bedeutsamen Wärmeverlust des Metalls während seines Durchflusses durch die Filteranordnung zu verhindern, enthält.

3. Filtrationssystem nach Anspruch 2, dadurch gekennzeichnet, dass jedes poröse Filter (26) ein Volumen und die Filteranordnung (20) ein durch die Summe der einzelnen Filtervolumina definiertes Totalvolumen aufweist und durch den Damm (30) ein Volumen an geschmolzenem Metall gesammelt wird, welches wenigstens dreimal das Totalvolumen der Filteranordnung (20) beträgt.

4. Filtrationssystem nach Anspruch 2, dadurch gekennzeichnet, dass der Damm (30) durch eine feste Wand mit einer Höhe, die der Höhe der obersten Kante des wenigstens einen Filters (26) der Filteranordnung (20) entspricht, gebildet wird.

5. Filtrationssystem nach Anspruch 4, dadurch gekennzeichnet, dass der Damm (30) aus Keramikmaterial besteht.

6. Filtrationssystem nach Anspruch 1, dadurch gekennzeichnet, dass die feste plattenförmige Wand (24) aus Keramikmaterial besteht und jedes Filter (26) ein keramisches Schaumfilter enthält.

7. Filtrationssystem nach Anspruch 1, dadurch gekennzeichnet, dass die Filterkammer (10) in Form eines Troges (50) für das geschmolzene Metall an sich gegenüberliegenden Enden einen zentralen Einlass (52) und zwei Auslässe (16'), zwischen denen sich je eine Filteranordnung (20') befindet, und die Vorrichtungen zur Verhinderung je einen Damm (30') zwischen jeder Filteranordnung (20') und jedem Auslass (16') aufweist.

8. Filtrationssystem nach Anspruch 1, dadurch gekennzeichnet, dass jedes Filter (26) eine runde Form und eine in eine entsprechende Abschrägung der festen plattenförmigen Wand (24) passende Abschrägung enthält.

9. Verfahren zur Filtration von geschmolzenem Metall, dadurch gekennzeichnet, dass eine Filterkammer (10) mit einem Einlass (14) und einem Auslass (16) für das geschmolzene Metall, wodurch die Fliessrichtung desselben dazwischen bestimmt wird, verwendet wird, in die eine Filteranordnung (20) mit wenigstens einem porösen, in einer festen plattenförmigen Wand sitzendes Filter (26) zwischen dem Einlass (14) und dem Auslass (16) plaziert wird, wenigstens ein poröses Filter (26) mit einem schmelzflüssigen anfänglichen Metallfluss benetzt und dieser anfängliche Metallfluss daran gehindert wird, zum Auslass (16) zu fliessen, wobei diese Hinderung dadurch bewirkt wird, dass der anfängliche Metallfluss in einem See (32) aus heissem geschmolzenem Metall gesammelt wird.

10. Verfahren nach Anspruch 9, dadurch gekennzeichnet, dass die Hinderung durch einen zwischen der Filteranordnung (20) und Auslass (16) angeordneten Damm (30) zur Sammlung eines bestimmten Volumens des geschmolzenen Metalls einschliesslich des anfänglichen schmelzflüssigen Metalls in Fliessrichtung hinter der Filteranordnung bewirkt wird.

11. Verfahren nach Anspruch 10, dadurch gekennzeichnet, dass jedes Filter (26) ein Volumen und jede Filteranordnung (20) ein durch die Summe der einzelnen Filtervolumina definiertes Totalvolumen aufweist und dass das geschmolzene Metall in einer Menge gesammelt wird, dass dessen Volumen wenigstens dreimal das Totalvolumen der Filteranordnung (20) aufweist.

TROG-TEMPERATUREN IN ABHÄNGIGKEIT DER ZEIT

_FIG-1_

_FIG-2_

_FIG-3_

_FIG-4_

_FIG-5_

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-C- 921 594 (DEGUSSA) * Figur 2 * --- | 1 | C 22 B 9/02 |
| Y | US-A-2 659 121 (EASTON et al.) * Figur 2 * --- | 1 | |
| A | DE-A-2 062 114 (AUGUST THYSSEN-HUETTE) * Figur * --- | 1 | |
| A | DE-A-3 151 434 (BRIDGESTONE TIRE) * Figur 2 * --- | 1 | |
| A,D | US-A-3 006 473 (GAMBER) --- | | |
| A,D | US-A-4 640 497 (HEAMON) ----- | | |

| | | | RECHERCHIERTE SACHGEBIETE (Int. Cl.5) |
|---|---|---|---|
| | | | C 22 B 9/02 |

Der vorliegende Recherchenbericht wurde für alle Patentansprüche erstellt

| Recherchenort | Abschlußdatum der Recherche | Prüfer |
|---|---|---|
| BERLIN | 11-06-1990 | SUTOR W |

EPO FORM 1503 03.82 (P0403)